# EUROPEAN PATENT APPLICATION

(11) **EP 4 101 615 A1**
(43) Date of publication of application: **14.12.2022**
(21) Application number: 22171848.9
(22) Date of filing: 05.05.2022
(51) Int. Cl.: B29C 33/00, B29C 43/18, B29C 43/38, B29C 70/68, B21D 22/20, B21D 37/08, B29C 70/88, B21D 47/04, B29C 70/78, B21D 22/22, B29K 105/06, B29K 105/12, B29K 105/20, B29K 705/00, B21D 22/02, B21D 22/10, B21D 22/21

(54) **APPARATUS AND METHOD FOR PRODUCING METAL-RESIN COMPOSITE**

(30) Priority: 10.06.2021 JP 2021097335
(71) Applicant: Kabushiki Kaisha Kobe Seiko Sho (Kobe Steel, Ltd.), Kobe-shi, Hyogo 651-8585 (JP)
(72) Inventor: IHARA, Ryohei, Hyogo, 651-2271 (JP); WATANABE, Kenichi, Hyogo, 651-2271 (JP); YAMAGUCHI, Zenzo, Hyogo, 651-2271 (JP)
(74) Representative: Müller-Boré & Partner Patentanwälte PartG mbB

(57) **Abstract**

The apparatus 50 includes an upper mold 110 and a lower mold 120 that sandwich the metal member 10 and the resin material 20, and a drive unit 130 that vertically moves an elastic member 114 attached to a molding surface of the upper mold 110 and at least one of the upper mold 110 and the lower mold 120. A cavity C for arranging the resin material 20 is provided by the upper mold 110 and the lower mold 120. The elastic member 114 is arranged so as to seal the resin material 20 in the cavity C.

## Description

### BACKGROUND OF THE INVENTION

### TECHNICAL FIELD

The present invention relates to an apparatus and a method for producing a metal-resin composite.

### BACKGROUND ART

An apparatus for producing a metal-resin composite by press molding a metal member and a thermosetting resin material is known (for example, Patent Document 1).

### PRIOR ART DOCUMENT

### PATENT DOCUMENT

Patent Document 1: JP 2020-104411 A

### SUMMARY OF THE INVENTION

### PROBLEMS TO BE SOLVED BY THE INVENTION

In the case of molding the metal-resin composite, it is difficult to close a gap between an upper mold and a lower mold as compared with a case of press molding only resin. As a result, a resin material may leak to an unintended location through the gap between the upper mold and the lower mold of the mold. Such leakage of the resin material leads to problems such as, for example, spot welding failure in a subsequent assembly process, metal mold fixing due to inflow of the resin material into another gap of the mold, and non-filling due to insufficient filling pressure of the resin material.

An object of the present invention is to suppress leakage of a resin material to an unintended location in an apparatus and a method for producing a metal-resin composite.

### MEANS FOR SOLVING THE PROBLEMS

According to a first aspect of the present invention, there is provided an apparatus for producing a metal-resin composite by press molding a metal member and a resin material. The apparatus includes an upper mold and a lower mold that sandwich the metal member and the resin material, an elastic member attached to a molding surface of the upper mold, and a drive unit that moves at least one of the upper mold and the lower mold in a vertical direction. A cavity for arranging the resin material is provided by the upper mold and the lower mold, and the elastic member is arranged to seal the resin material in the cavity.

According to this configuration, since the elastic member is attached to the upper mold so as to seal the resin material in the cavity, leakage of the resin material from the cavity can be suppressed, that is, leakage of the resin material to an unintended location can be suppressed. Further, by suppressing the leakage of the resin material, the filling pressure of the resin material in the cavity is increased, and stable molding of the resin material can be realized. Therefore, a metal-resin composite having stable quality can be produced.

The metal-resin composite may have, in a cross section perpendicular to a longitudinal direction, a bottom wall portion extending in a horizontal direction, side wall portions rising from both ends of the bottom wall portion, and a flange portion extending outward in the horizontal direction from the side wall portion, and the upper mold may have, in the cross section, a first molding upper surface for molding the bottom wall portion, a second molding upper surface for molding the side wall portion, and a third molding upper surface for molding the flange portion.

According to this configuration, a cross-sectional shape of the metal-resin composite is formed into a hat shape. The metal-resin composite having a hat shape has high versatility and can be used for various applications.

A step may be provided on the second molding upper surface.

According to this configuration, in order for the resin material to leak out of the cavity, the resin material needs to flow beyond the step of the upper mold. For this reason, the leakage of the resin material can be suppressed. Therefore, the filling pressure in the cavity of the resin material can be increased, and the quality can be improved.

According to this configuration, leakage of the resin material to the flange portion can be suppressed to a certain extent. The flange portion of the metal-resin composite is often used for joining to other components, and is a portion requiring surface protection.

The elastic member may be attached to the step, and a thickness of the elastic member may be set so that the elastic member protrudes from the second molding upper surface in a state of being attached to the step.

According to this configuration, it is possible to suppress leakage of the resin material from the cavity by both the elastic member and the step. Further, since the elastic member protrudes from the second molding upper surface, the elastic member is sandwiched between the upper mold and the lower mold and receives a compressive force. Therefore, the effectiveness of a sealing function of the elastic member can be enhanced.

The elastic member may have a thick portion that has a relatively large thickness and a thin portion that has a relatively small thickness.

According to this configuration, consumption of the elastic member can be suppressed and the elastic member can be easily reused. If an elastic member having a uniform thickness is arranged across the step, the elastic member is relatively strongly compressed on the step and relatively weakly compressed below the step. Therefore, the elastic member is consumed particularly on the step, and there is possibility that the elastic member cannot be reused. In the above configuration, the thin portion can be arranged on the step, and the thick portion can be arranged below the step. Therefore, eccentricity of a compressive force applied to the elastic member can be improved, the consumption of the elastic member can be suppressed, and the elastic member can be reused.

The step may be formed so as to ascend by two steps upward.

According to this configuration, when the elastic member is sandwiched, the compressive force can be adjusted according to the position of the elastic member. Therefore, excessive compression and insufficient compression on the elastic member can be suppressed.

The second molding upper surface may be provided with a holding groove for holding the elastic member, and a thickness of the elastic member may be set so that the elastic member protrudes from the second molding upper surface in a state of being attached to the holding groove.

According to this configuration, since the elastic member can be held by the holding groove, the elastic member can be easily positioned and movement of the elastic member during molding can be restricted. Further, since the elastic member protrudes from the second molding upper surface, the elastic member is sandwiched between the upper mold and the lower mold and receives a compressive force. Therefore, the effectiveness of a sealing function of the elastic member can be enhanced.

According to a second aspect of the present invention, there is provided a method for producing a metal-resin composite by press molding a metal member and a resin material. The method includes sandwiching the metal member and the resin material between an upper mold and a lower mold that provide a cavity for arranging the resin material, and executing the press molding while sealing the resin material with an elastic member so that the resin material does not leak from the cavity.

According to this method, since the resin material can be sealed in the cavity by the elastic member, leakage of the resin material from the cavity can be suppressed, that is, leakage of the resin material to an unintended location can be suppressed.

### EFFECT OF INVENTION

According to the present invention, in an apparatus and a method for producing a metal-resin composite, leakage of a resin material to an unintended location can be suppressed.

### BRIEF DESCRIPTION OF THE DRAWINGS

Fig. 1 is a cross-sectional view of a metal-resin composite;
Fig. 2 is a cross-sectional view illustrating a first process of a method for producing a metal-resin composite in a first embodiment;
Fig. 3 is a cross-sectional view illustrating a second process of the method for producing the metal-resin composite in the first embodiment;
Fig. 4 is a cross-sectional view illustrating a third process of the method for producing the metal-resin composite in the first embodiment;
Fig. 5 is a cross-sectional view illustrating a fourth process of the method for producing the metal-resin composite in the first embodiment;
Fig. 6 is a cross-sectional view illustrating a fifth process of the method for producing the metal-resin composite in the first embodiment;
Fig. 7 is a cross-sectional view illustrating a third process of a method for producing a metal-resin composite in a first variation of the first embodiment;
Fig. 8 is a cross-sectional view illustrating a third process of a method for producing a metal-resin composite in a second variation of the first embodiment;
Fig. 9 is a cross-sectional view illustrating a fourth process of the method for producing the metal-resin composite in the second variation of the first embodiment;
Fig. 10 is a cross-sectional view illustrating a sixth process of the method for producing a metal-resin composite in a third variation of the first embodiment;
Fig. 11 is a cross-sectional view illustrating a first process of a method for producing a metal-resin composite in a second embodiment;
Fig. 12 is a cross-sectional view illustrating a second process of the method for producing the metal-resin composite in the second embodiment;
Fig. 13 is a cross-sectional view illustrating a third process of the method for producing the metal-resin composite in the second embodiment;
Fig. 14 is a cross-sectional view illustrating a fourth process of the method for producing the metal-resin composite in the second embodiment;
Fig. 15 is a cross-sectional view illustrating a fifth process of the method for producing the metal-resin composite in the second embodiment;
Fig. 16 is a cross-sectional view illustrating a sixth process of the method for producing the metal-resin composite in the second embodiment; and
Fig. 17 is a cross-sectional view illustrating a seventh process of the method for producing the metal-resin composite in the second embodiment.

### DETAILED DESCRIPTION OF THE PREFERRED EMBODIMENT

Hereinafter, an apparatus and a method for producing a metal-resin composite will be described as an embodiment of the present invention with reference to the accompanying drawings.

### (First embodiment)

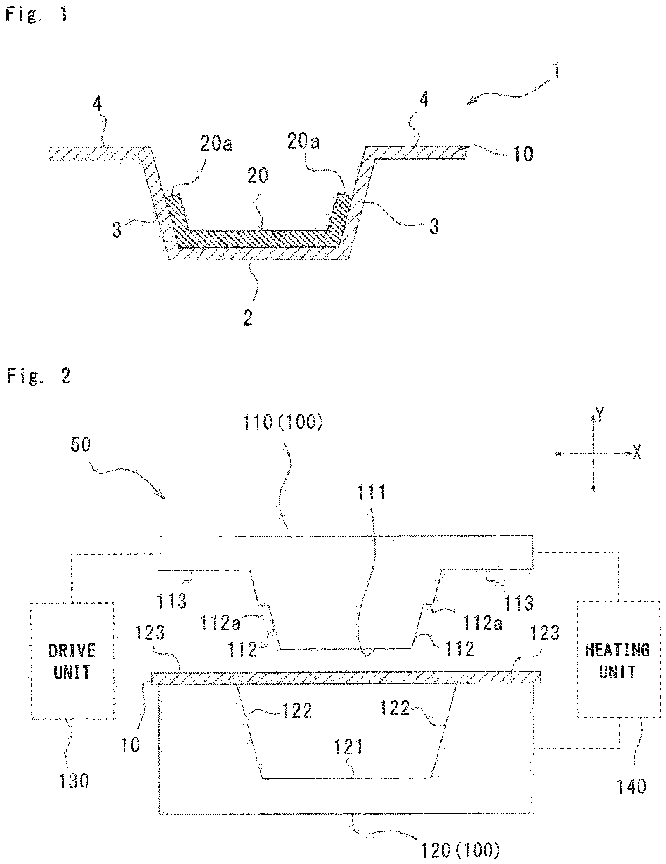

Referring to Fig. 1, a metal-resin composite 1 produced in the present embodiment includes a metal plate (metal member) 10 and a resin material 20. The metal-resin composite 1 has a hat shape in a cross section perpendicular to a longitudinal direction. Specifically, the metal-resin composite 1 is formed by fixing the resin material 20 to an inner surface (recessed surface) of the metal plate 10 having a hat shape. However, the shape of the metal-resin composite 1 is not limited to a hat shape, and may be any shape.

The metal-resin composite 1 includes a bottom wall portion 2 extending in the horizontal direction, side wall portions 3 rising from both ends of the bottom wall portion 2, and a flange portion 4 extending outward in the horizontal direction from the side wall portion 3. The bottom wall portion 2 includes the metal plate 10 and the resin material 20, the side wall portion 3 includes the metal plate 10 and the resin material 20, and the flange portion 4 includes only the metal plate 10. The resin material 20 terminates at an end surface 20a on the side wall portion 3 from the bottom wall portion 2 toward the flange portion 4.

An apparatus 50 and a method for producing the metal-resin composite 1 in the present embodiment will be described with reference to Figs. 2 to 6. In the drawings, the horizontal direction is indicated as an X direction, and the vertical direction is indicated as a Y direction. Further, the metal-resin composite 1 (the metal plate 10 and the resin material 20) and an elastic member 114 to be described later are hatched to indicate a cross section. However, hatching is omitted for other members for clarity of illustration.

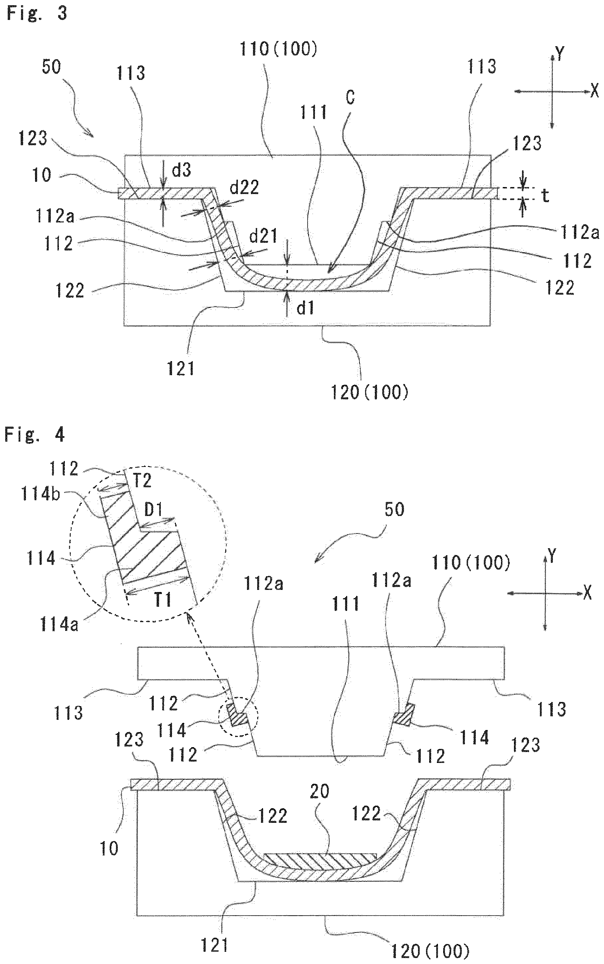

In the present embodiment, press molding is performed twice while first to fifth processes illustrated in Figs. 2 to 6 are executed sequentially. First pressing is executed in the first to third processes illustrated in Figs. 2 to 4, and second pressing is executed in the third to sixth processes illustrated in Figs. 4 to 6. Note that, in the present embodiment, the first and second pressing are performed with a same mold 100. However, the first and second pressing may be performed with different molds.

The apparatus 50 for producing the metal-resin composite 1 in the present embodiment includes the mold 100, a drive unit 130 that drives the mold 100, and a heating unit 140 that heats the mold 100. Note that, as the drive unit 130 and the heating unit 140, publicly-known units capable of executing press molding can be used, and details are not illustrated and a conceptual diagram is illustrated only in Fig. 2, and illustration is omitted in Fig. 3 and subsequent figures.

The mold 100 is for press molding the metal plate 10 and the resin material 20 to produce the metal-resin composite 1. The mold 100 includes an upper mold 110 and a lower mold 120 that sandwich the metal plate 10 and the resin material 20. In the present embodiment, the upper mold 110 is configured as a punch, and the lower mold 120 is configured as a die. The upper mold 110 is movable in the vertical direction by the drive unit 130, that is, is configured to be capable of approaching and separating from the lower mold 120. However, a driving mode of the mold 100 by the drive unit 130 is not particularly limited, and the drive unit 130 can move at least one of the upper mold 110 and the lower mold 120 in the vertical direction.

The upper mold 110 has a first molding upper surface 111 for molding the bottom wall portion 2 (see Fig. 1), a second molding upper surface 112 for molding the side wall portion 3 (see Fig. 1), and a third molding upper surface 113 for molding the flange portion 4 (see Fig. 1). In the present embodiment, the first molding upper surface 111 and the third molding upper surface 113 are configured as horizontal surfaces, and the second molding upper surface 112 is configured to connect the first molding upper surface 111 and the third molding upper surface 113 and to be inclined from the vertical direction.

In the present embodiment, a step 112a is provided on the second molding upper surface 112. The step 112a is provided so as to rise one step from the first molding upper surface 111 toward the third molding upper surface 113.

The lower mold 120 has a first molding lower surface 121 for molding the bottom wall portion 2 (see Fig. 1), a second molding lower surface 122 for molding the side wall portion 3 (see Fig. 1), and a third molding lower surface 123 for molding the flange portion 4 (see Fig. 1). In the present embodiment, the first molding lower surface 121 and the third molding lower surface 123 are configured as horizontal surfaces, and the second molding lower surface 122 is configured to connect the first molding lower surface 121 and the third molding lower surface 123 and to be inclined from the vertical direction. The first molding lower surface 121 is arranged to face the first molding upper surface 111, the second molding lower surface 122 is arranged to face the second molding upper surface 112, and the third molding lower surface 123 is arranged to face the third molding upper surface 113.

In the first process illustrated in Fig. 2, the upper mold 110 and the lower mold 120 are heated by the heating unit 140 to be prepared so that warm pressing can be performed. Further, the metal plate 10 having a flat plate shape before molding is placed on the lower mold 120.

In the second process illustrated in Fig. 3, the upper mold 110 is lowered, and the metal plate 10 is sandwiched between the upper mold 110 and the lower mold 120 and press molded into a substantially hat shape. In a state where the upper mold 110 and the lower mold 120 are closed, a distance d1 between the first molding upper surface 111 and the first molding lower surface 121 is larger than a thickness t of the metal plate 10 (d1 > t), and a distance d3 between the third molding upper surface 113 and the third molding lower surface 123 is substantially equal to the thickness t of the metal plate 10 (d3 = t). A distance d21 between the second molding upper surface 112 and the second molding lower surface 122 below the step 112a is larger than the thickness t of the metal plate 10 (d21 > t), and a distance d22 between the second molding upper surface 112 and the second molding lower surface 122 above the step 112a is substantially equal to or slightly larger than the thickness t of the metal plate 10 (d22 = t or d22 > t). In particular, by setting the distance d22 equal to the thickness t of the metal plate 10, filling pressure of the resin material 20 in a subsequent process can be increased. Note that, in this process, the resin material 20 (see Figs. 4 to 6) is not provided yet, and only metal plate 10 is sandwiched between upper mold 110 and lower mold 120. In a state where the upper mold 110 and the lower mold 120 are closed, a cavity C to be filled with the resin material 20 is provided between the first and second molding upper surfaces 111 and 112 and the first and second molding lower surfaces 121 and 122 (specifically, the metal plate 10).

In the third process illustrated in Fig. 4, the upper mold 110 is raised. At this time, the metal plate 10 is molded into a shape close to a final shape (a hat shape in the present embodiment). After the upper mold 110 is raised, the elastic member 114 is attached to the upper mold 110 for the second pressing. The elastic member 114 has elasticity and is made from, for example, silicone rubber. In Fig. 4, a portion indicated by a broken line circle is enlarged. In the present embodiment, the elastic member 114 has a thick portion 114a having a relatively large thickness and a thin portion 114b having a relatively small thickness, and has a substantially L shape. The thick portion 114a has a thickness T1, and the thin portion 114b has a thickness T2 smaller than the thickness T1 (T2 < T1). The elastic member 114 is arranged so as to seal the resin material 20 in the cavity C. In the present embodiment, the elastic member 114 is attached to the step 112a. The elastic member 114 is arranged across the step 112a, the thick portion 114a is arranged below the step 112a, and the thin portion 114b is arranged on the step 112a. The thickness T1 of the thick portion 114a of the elastic member 114 is larger than a depth D1 of the step 112a to be attached (T1 > D1). Due to this dimensional relationship, the elastic member 114 protrudes from the second molding upper surface 112 in a state of being attached to the step 112a. After the elastic member 114 is attached, the resin material 20 (also referred to as a prepreg) having a sheet-like shape cut into a necessary size is placed on the metal plate 10. In the present embodiment, the resin material 20 is cured at a high temperature and a high pressure by a molding method called sheet molding compound (SMC) method (see the fourth process described later). In the present embodiment, as the resin material 20, a fiber reinforced plastic (FRP) in which a glass fiber or a carbon fiber is impregnated into resin is used. Further, in the present embodiment, the resin material 20 has a thermosetting property. In this process, the resin material 20 is not yet heated, that is, not cured. Note that the resin material 20 does not need to have a sheet-like shape, and can have any shape.

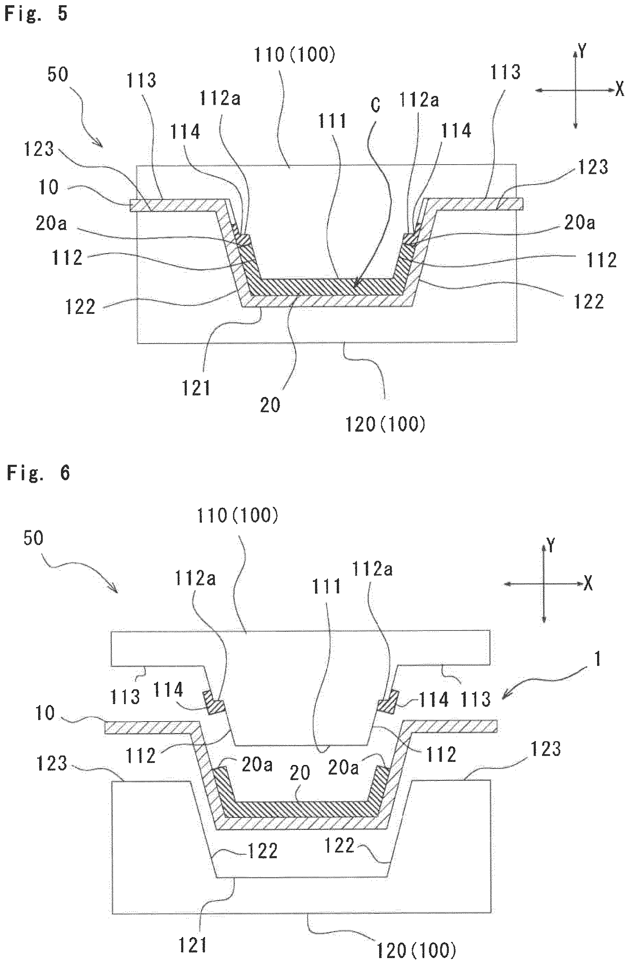

In the fourth process illustrated in Fig. 5, the upper mold 110 is lowered, and the metal plate 10 and the resin material 20 are sandwiched between the upper mold 110 and the lower mold 120 to be press molded into a hat shape. At this time, the cavity C is filled with the resin material 20, and the elastic member 114 is compressed in the thickness direction. That is, the resin material 20 cut to a necessary size is put into the mold 100 and cured under high temperature and high pressure by the SMC method. In the present embodiment, the cavity C refers to a space below the step 112a formed by being sandwiched between the upper mold 110 and the lower mold 120 (specifically, the metal plate 10). The cavity C is sealed by the elastic member 114 so that the resin material 20 does not leak. Therefore, the resin material 20 is heated in the cavity C and is cured without leaking from the cavity C. At this time, the resin material 20 is in contact with the elastic member 114 at the end surface 20a.

In the fifth process illustrated in Fig. 6, the upper mold 110 is raised. The metal plate 10 is molded into a final shape (a hat shape in the present embodiment), and the resin material 20 is fixed to an upper surface (a hat-shaped recessed surface) of the metal plate 10 so that the metal-resin composite 1 is formed. Note that the elastic member 114 is restored to its original shape by its elasticity and can be reused. Preferably, the elastic member 114 has heat resistance enough to withstand heating from the heating unit 140 (see Fig. 2). Further, preferably, the elastic member 114 is made from a material having excellent peelability so as to be easily separated from the resin material 20 after molding.

According to the present embodiment, since the elastic member 114 is attached to the upper mold 110 so as to seal the resin material 20 in the cavity C, leakage of the resin material 20 from the cavity C can be suppressed, that is, leakage of the resin material 20 to an unintended location (for example, the flange portion 4 or the like) can be suppressed. Further, by suppressing the leakage of the resin material 20, the filling pressure of the resin material 20 in the cavity C is increased, and stable molding of the resin material 20 can be realized. Therefore, the metal-resin composite 1 having stable quality can be produced.

Further, in the present embodiment, a cross-sectional shape of the metal-resin composite 1 is formed into a hat shape. The metal-resin composite 1 having a hat shape has high versatility and can be used for various applications.

Further, since the resin material 20 needs to flow beyond the step 112a of the upper mold 110 in order to leak out of the cavity C, it is possible to suppress the leakage of the resin material 20. Therefore, the filling pressure of the resin material 20 in the cavity C can be increased, and the quality can be improved.

Further, in the present embodiment, since the elastic member 114 is attached to the step 112a, it is possible to suppress leakage of the resin material 20 from the cavity C by both the elastic member 114 and the step 112a. Further, since the thickness T1 of the elastic member 114 is larger than the depth D1 of the step 112a (see Fig. 4), the elastic member 114 protrudes from the second molding upper surface 112, is sandwiched between the upper mold 110 and the lower mold 120, and receives a compressive force. Therefore, the effectiveness of a sealing function of the elastic member 114 can be enhanced.

Further, in the present embodiment, since the elastic member 114 has the thick portion 114a and the thin portion 114b, consumption of the elastic member 114 can be suppressed and the elastic member can be easily reused. If the elastic member 114 having a uniform thickness is arranged across the step 112a, the elastic member 114 is relatively strongly compressed on the step 112a and relatively weakly compressed below the step 112a. Therefore, the elastic member 114 is consumed particularly on the step 112a, and there is possibility that the elastic member 114 cannot be reused. In contrast, in the present embodiment, the thin portion 114b is arranged on the step 112a, and the thick portion 114a is arranged below the step 112a. Therefore, eccentricity of a compressive force applied to the elastic member 114 can be improved, the consumption of the elastic member 114 can be suppressed, and the elastic member 114 can be reused.

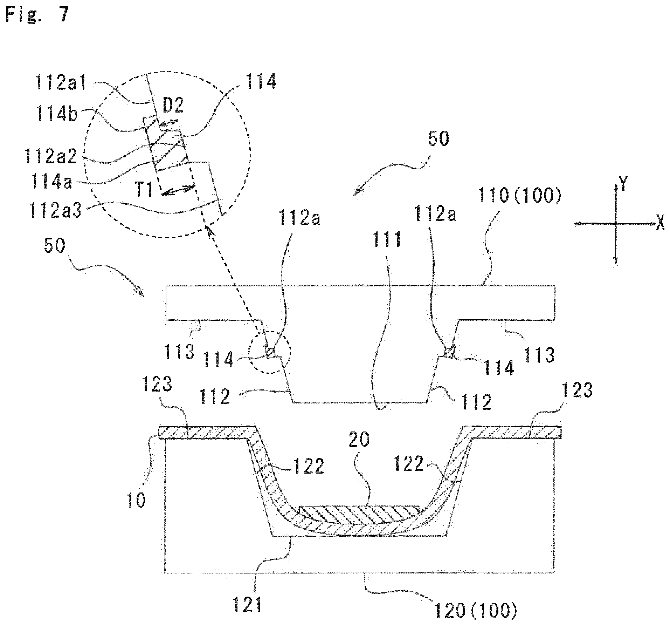

Further, referring to Fig. 7 illustrating a variation of Fig. 4, the step 112a may be formed so as to ascend by two steps upward. In Fig. 7, a portion indicated by a broken line circle is enlarged. In the illustrated example, the step 112a includes an upper stage 112a1, a middle stage 112a2, and a lower stage 112a3 in order from the top. The elastic member 114 is arranged across the upper stage 112a1 and the middle stage 112a2, and is not arranged on the lower stage 112a3. The thickness T1 of the thick portion 114a of the elastic member 114 is larger than a depth D2 of the step 112a to be attached (T1 > D2). Here, the depth D2 of the step 112a refers to the depth of a portion to which the elastic member 114 is attached (the depth from the upper stage 112a1 to the middle stage 112a2 in the illustrated example). Due to this dimensional relationship, the elastic member 114 protrudes from the upper stage 112a1 of the second molding upper surface 112 in a state of being attached to the step 112a.

According to the present variation, when the elastic member 114 is sandwiched, the compressive force can be adjusted according to the position of the elastic member 114. As in the illustrated example, the elastic member 114 may be arranged across the upper stage 112a1 and the middle stage 112a2 without being arranged on the lower stage 112a3, or the elastic member 114 may be arranged across the middle stage 112a2 and the lower stage 112a3 without being arranged on the upper stage 112a1. Further, the elastic member 114 may be arranged across the upper stage 112a1, the middle stage 112a2, and the lower stage 112a3. As described above, by adjusting the thickness and arrangement of the elastic member 114, excessive compression and insufficient compression on the elastic member 114 can be suppressed.

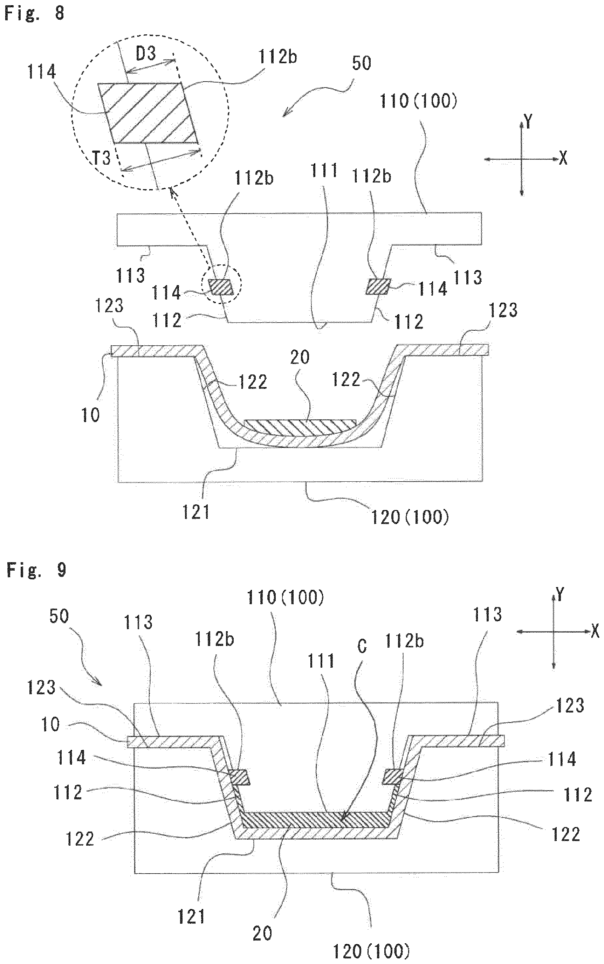

Referring to Figs. 8 and 9 illustrating another variation of Figs. 4 and 5, the second molding upper surface 112 may be provided with a holding groove 112b for holding the elastic member 114 instead of the step 112a. In Fig. 8, a portion indicated by a broken line circle is enlarged. The holding groove 112b is formed by notching the second molding upper surface 112 in the horizontal direction. The elastic member 114 has a uniform thickness, and a thickness T3 of the elastic member 114 is larger than a depth D3 of the holding groove 112b in the horizontal direction. The elastic member 114 protrudes from the second molding upper surface 112 in a state of being attached to the holding groove 112b.

In the present variation, the cavity C refers to a space below the holding groove 112b formed by being sandwiched between the upper mold 110 and the lower mold 120 (specifically, the metal plate 10).

According to the present variation, since the elastic member 114 can be held by the holding groove 112b, the elastic member 114 can be easily positioned, and the movement of the elastic member 114 during molding can be restricted. Further, since the elastic member 114 protrudes from the second molding upper surface 112 according to the dimensional relationship (T3 > D3), the elastic member 114 is sandwiched between the upper mold 110 and the lower mold 120 and receives a compressive force. Therefore, the effectiveness of a sealing function of the elastic member 114 can be enhanced.

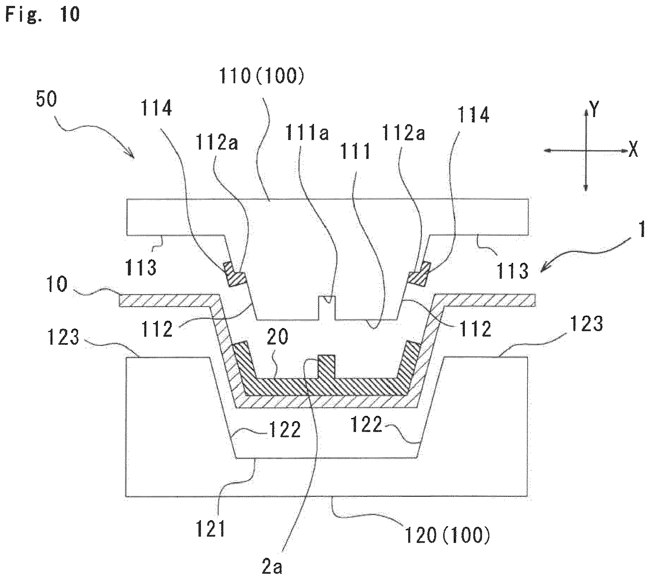

Further, referring to Fig. 10 illustrating a variation of Fig. 6, the metal-resin composite 1 may have a protrusion 2a on the bottom wall portion 2. The protrusion 2a is made from the resin material 20 and extends vertically upward in an elongated manner. A recess 111a having a shape complementary to the protrusion 2a is formed on the first molding upper surface 111. The recess 111a opens downward on the first molding upper surface 111.

In a case where the resin material 20 is molded in an elongated manner like the protrusion 2a, a sufficient filling pressure is required. However, here, since the filling pressure of the resin material 20 is increased by the elastic member 114, an elongated shape like that of the protrusion 2a can also be stably formed.

### (Second embodiment)

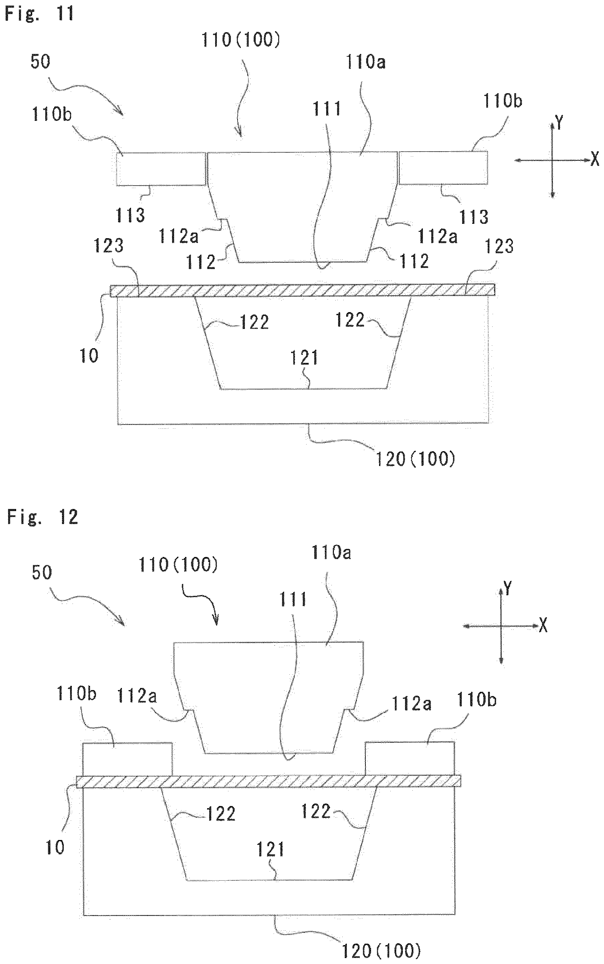

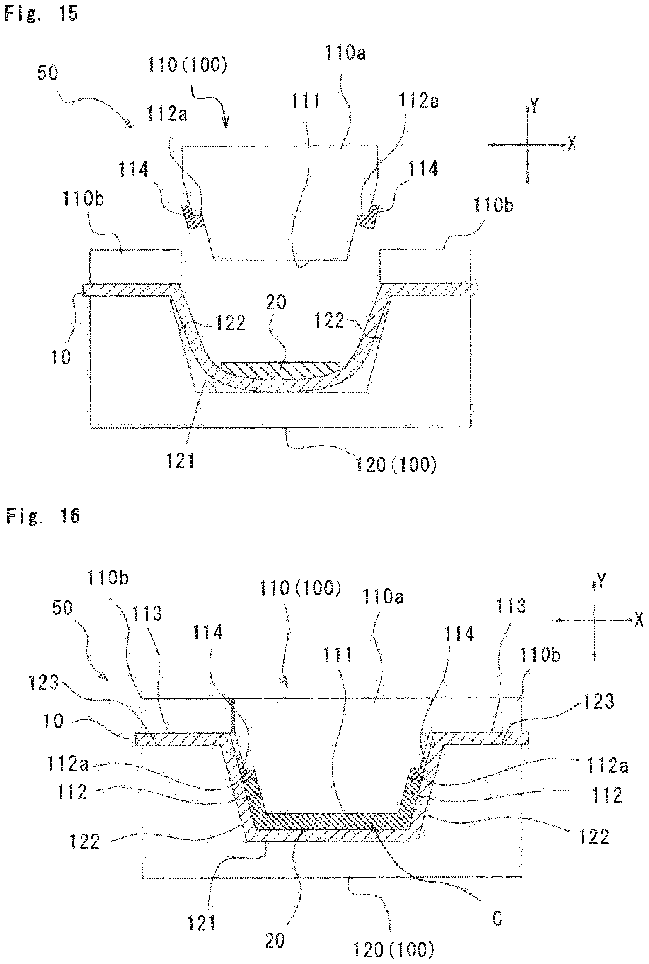

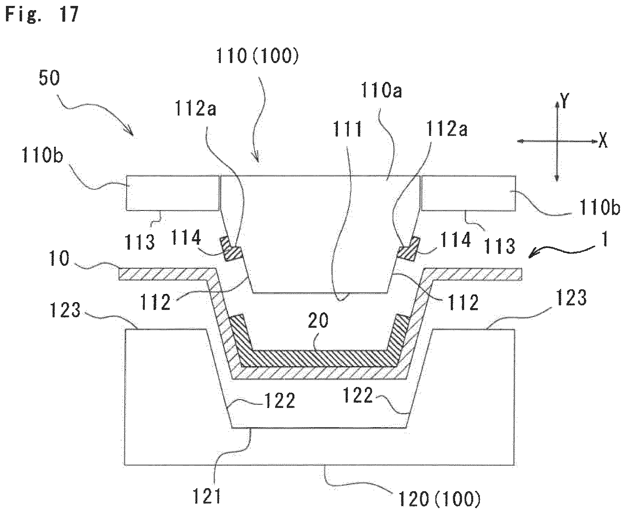

The mold 100, the apparatus 50, and a method for producing the metal-resin composite 1 according to a second embodiment will be described with reference to Figs. 11 to 17.

In the present embodiment illustrated in Figs. 11 to 17, the upper mold 110 has a separated punch 110a and a holder 110b. The present embodiment is substantially the same as the first embodiment except for this. Therefore, the description of a portion illustrated in the first embodiment may be omitted.

In the present embodiment, the upper mold 110 includes the holder 110b for pressing the metal plate 10 and the punch 110a for molding. The holder 110b and the punch 110a are independently movable in the vertical direction by the drive unit 130 (see Fig. 2).

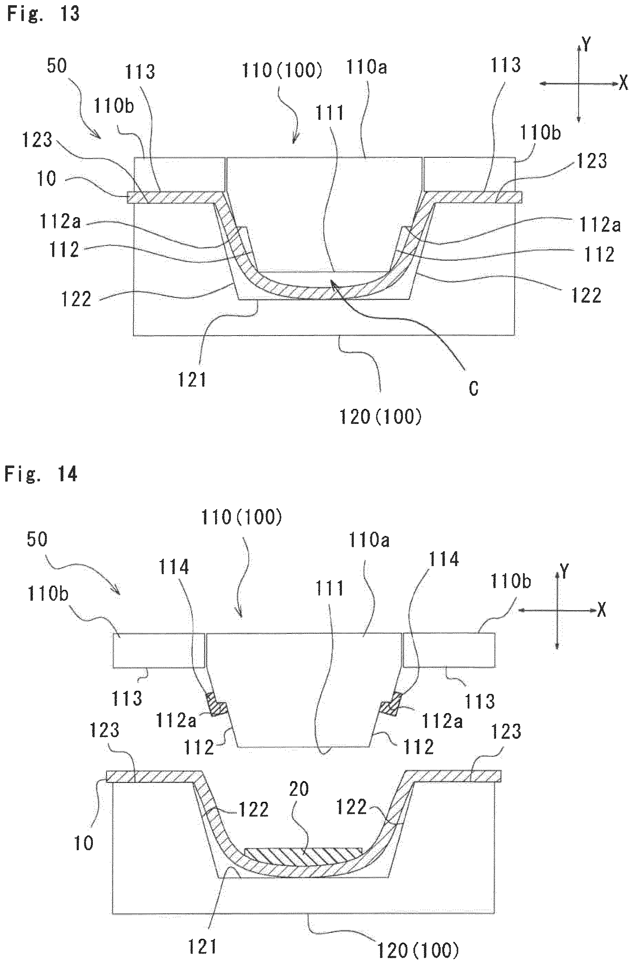

In the present embodiment, press molding is performed twice while first to seventh processes illustrated in Figs. 11 to 17 are executed sequentially. First pressing is executed in the first to fourth processes illustrated in Figs. 11 to 14, and second pressing is executed in the fourth to seventh processes illustrated in Figs. 14 to 17.

In the first press of the first to fourth processes illustrated in Figs. 11 to 14, unlike the first embodiment, the holder 110b descends prior to the punch 110a to press the metal plate 10. Next, the punch 110a descends to press mold the metal plate 10. The first to fourth processes of the present embodiment are substantially the same as the first to third processes of the first embodiment except that the punch 110a and the holder 110b are independently driven as described above.

Also in the second pressing in the fourth to seventh processes illustrated in Figs. 14 to 17, unlike the first embodiment, the holder 110b descends prior to the punch 110a to press the metal plate 10. Next, the punch 110a descends to press mold the metal plate 10. The fourth to seventh processes of the present embodiment are substantially the same as the third to fifth processes of the first embodiment except that the punch 110a and the holder 110b are independently driven as described above.

The operation and effect of the present embodiment are substantially the same as those of the first embodiment.

Although specific embodiments of the present invention and variations of the embodiments are described above, the present invention is not limited to the above embodiments, and various modifications can be made within the scope of the present invention. For example, an embodiment of the present invention may be obtained by appropriately combining the content of individual embodiments and variations.

In each of the above embodiments, the example in which the elastic member 114 is attached to the second molding upper surface 112 of the upper mold 110 is disclosed. However, the position of the elastic member 114 is not particularly limited. For example, the elastic member 114 may be attached to the first molding upper surface 111 or the third molding upper surface 113.

Further, as the resin material 20, a thermoplastic resin impregnated with a glass fiber or a carbon fiber may be used. In this case, the resin material 20 is put into the mold 100 in a state of being heated and softened. Then, the resin material 20 is cooled and cured on the metal plate 10 in the mold 100 so that the metal-resin composite 1 is produced.

In the metal-resin composite 1, an adhesive layer may be provided between the metal plate 10 and the resin material 20. In this case, by providing the adhesive layer, the metal member 10 and the resin material 20 can be firmly integrally molded.

### DESCRIPTION OF SYMBOLS

- 1: Metal-plastic composite
- 2: Bottom wall portion
- 3: Side wall portion
- 4: Flange portion
- 10: Metal plate (Metal member)
- 20: Resin material
- 20a: End surface
- 50: Apparatus
- 100: Mold
- 110: Upper mold
- 110a: Punch
- 110b: Holder
- 111: First molding upper surface
- 111a: Recess
- 112: Second molding upper surface
- 112a: Step
- 112a1: Upper stage
- 112a2: Middle stage
- 112a3: Lower stage
- 112b: Holding groove
- 113: Third molding upper surface
- 114: Elastic member
- 114a: Thick portion
- 114b: Thin portion
- 120: Lower mold
- 121: First molding lower surface
- 122: Second molding lower surface
- 123: Third molding lower surface
- 130: Drive unit
- 140: Heating unit
- C: Cavity

## Claims

1. An apparatus for producing a metal-resin composite by press molding a metal member and a resin material, the apparatus comprising:
an upper mold and a lower mold that sandwich the metal member and the resin material;
an elastic member attached to a molding surface of the upper mold; and
a drive unit that moves at least one of the upper mold and the lower mold in a vertical direction,
wherein a cavity for arranging the resin material is provided by the upper mold and the lower mold, and
the elastic member is arranged to seal the resin material in the cavity.

2. The apparatus according to claim 1, wherein
the metal-resin composite has, in a cross section perpendicular to a longitudinal direction, a bottom wall portion extending in a horizontal direction, side wall portions rising from both ends of the bottom wall portion, and a flange portion extending outward in the horizontal direction from the side wall portion, and
the upper mold has, in the cross section, a first molding upper surface for molding the bottom wall portion, a second molding upper surface for molding the side wall portion, and a third molding upper surface for molding the flange portion.

3. The apparatus according to claim 2, wherein the second molding upper surface is provided with a step.

4. The apparatus according to claim 3, wherein
the elastic member is attached to the step, and
a thickness of the elastic member is set so that the elastic member protrudes from the second molding upper surface in a state of being attached to the step.

5. The apparatus of claim 4, wherein the elastic member has a thick portion that has a relatively large thickness and a thin portion that has a relatively small thickness.

6. The apparatus according to any one of claims 3 to 5, wherein the step is formed so as to ascend by two steps upward.

7. The apparatus according to claim 2, wherein
the second molding upper surface is provided with a holding groove for holding the elastic member, and
a thickness of the elastic member is set so that the elastic member protrudes from the second molding upper surface in a state of being attached to the holding groove.

8. A method for producing a metal-resin composite by press molding a metal member and a resin material, the method comprising:
sandwiching the metal member and the resin material between an upper mold and a lower mold that provide a cavity for arranging the resin material, and
executing the press molding while sealing the resin material with an elastic member so that the resin material does not leak from the cavity.
